(19) Europäisches Patentamt / European Patent Office / Office européen des brevets

(11) **EP 4 450 377 B1**

(12) **EUROPEAN PATENT SPECIFICATION**

(45) Date of publication and mention
of the grant of the patent:
**24.12.2025 Bulletin 2025/52**

(21) Application number: **23181999.6**

(22) Date of filing: **28.06.2023**

(51) International Patent Classification (IPC):
**B62M 19/00** *(2006.01)*     **B62M 6/45** *(2010.01)*

(52) Cooperative Patent Classification (CPC):
**B62M 6/45; B60L 15/20; B60L 50/20; B62M 19/00;**
B60L 2200/12; B60L 2240/12; B60L 2240/26;
B60L 2240/421; B60L 2240/423; B60L 2240/429;
B60L 2240/642; B60L 2250/26; B62M 6/50;
B62M 6/60

(54) **SYSTEM AND METHOD FOR CONTROLLING ELECTRIC BICYCLE, AND ELECTRIC BICYCLE HAVING THE SAME**

SYSTEM UND VERFAHREN ZUR STEUERUNG EINES ELEKTRISCHEN FAHRRADS UND ELEKTRISCHES FAHRRAD DAMIT

SYSTÈME ET PROCÉDÉ DE COMMANDE DE BICYCLETTE ÉLECTRIQUE, ET BICYCLETTE ÉLECTRIQUE LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.04.2023 KR 20230051907**

(43) Date of publication of application:
**23.10.2024 Bulletin 2024/43**

(73) Proprietor: **HL Mando Corporation
Pyeongtaek-si, Gyeonggi-do 17962 (KR)**

(72) Inventor: **Chung, Hanbyul
13550 Seongnam-si, Gyeonggi-do (KR)**

(74) Representative: **Gulde & Partner
Patent- und Rechtsanwaltskanzlei mbB
Berliner Freiheit 2
10785 Berlin (DE)**

(56) References cited:
KR-A- 20170 094 908     US-A1- 2022 185 427
US-A1- 2022 194 520     US-A1- 2022 234 680

## Description

### [Technical Field]

The present disclosure relates to a control technology for an electric bicycle, and more particularly, to a control technology for an electric bicycle for providing a consistent pedal load regardless of a change in cargo weight.

### [Background Art]

An electric bicycle refers to a bicycle that moves by adding a driving force by an electric motor to the force of stepping on the pedal or is driven only by an electric motor.

A pedaling-type electric bicycle has a method of transmitting power according to a driver's pedal force to a wheel through a chain, like a general bicycle, and using a driving force of a motor as an auxiliary for the corresponding power, and a method of traveling by generating a signal according to the force of stepping on the pedal to drive a motor without a chain. In particular, in the case of a method without a chain, a load (i.e., resistance force) is provided to the pedal to provide a feeling of stepping on the pedal (i.e., pedal feeling) to the user.

Meanwhile, cargoes of various weights may be loaded on the electric bicycle. In this case, the cargo means to include additionally loaded objects in addition to the driver riding the corresponding electric bicycle. That is, the weight of the cargo includes the weight of additionally loaded objects in addition to the weight of the driver riding the electric bicycle.

In particular, in the case of a conventional electric bicycle (hereinafter, referred to as "related art"), an inconsistent pedal feeling is provided depending on the weight of loaded cargo. That is, in the related art, the pedal load is varied according to the cargo weight.

As an example, the related art may provide a pedal load having a positive correlation (e.g., a proportional relationship) with respect to an output (i.e., a torque generated in response to driving of the driving motor) of a motor (hereinafter referred to as a "driving motor") that drives a wheel of an electric bicycle. In this case, the heavier the cargo, the larger the output of the driving motor should be generated to produce the same speed. Accordingly, as the cargo weight increases, a greater pedal load (that is, a pedal feeling of a larger resistance force) is provided, causing a problem in which a user's traveling convenience is deteriorated.

For example, US 2022/0194520 A1 discloses a chainless electrical bicycle, which is designed to eliminate any type of mechanical means to transfer torque and power from pedals to a traction wheel by employing a generator to transfer a pedal torque and power with the help of power electronics, control electronics, a battery and control methods to a motor that is used for traction, which is attached to the traction wheel.

However, the above-described description merely provides background information about the present disclosure and does not correspond to the previously disclosed technology.

### [Disclosure]

### [Technical Problem]

In order to solve the problems of the related art, the present disclosure is directed to providing a control technology for an electric bicycle to provide a consistent pedal load regardless of a change in a cargo weight.

That is, the present disclosure is directed to providing a control technology for an electric bicycle to provide a pedal load of a predetermined level even when a cargo weight is increased.

The technical problems to be achieved in the present disclosure are not limited to the technical problems mentioned above, and other technical problems not mentioned will be clearly understood by those of ordinary skill in the art from the following description.

### [Technical Solution]

In order to solve the above problems, the control system according to an embodiment of the present disclosure is a control system for an electric bicycle providing a pedal feeling to a driver by providing a pedal load according to driving of a pedal motor, and includes a memory; and a processor configured to perform control using information stored in the memory such that a pedal load of a predetermined range is provided from the pedal motor even when a change is in a cargo weight obtained by adding a weight of the driver and a weight of a loaded object.

The processor is configured to estimate the cargo weight based on an output value of a driving motor providing a driving force for traveling of the electric bicycle and traveling data of the electric bicycle, generate a pedal torque command corresponding to the cargo weight estimation value, and transmit the pedal torque command to the pedal motor.

The processor may be configured to calculate a correction output obtained by removing an output amount by the cargo weight estimation value from an output of the driving motor, and generate the pedal torque command corresponding to the calculated correction output.

A magnitude value of the pedal torque command may have a value of a positive correlation with respect to the correction output.

The output value of the driving motor may be a torque value of the driving motor calculated by using a sensor value for a current of the driving motor detected by a current sensor and a sensor value for a position of the driving motor detected by a position sensor, respectively.

According to the present invention the traveling data includes a speed (v) of the electric bicycle according to a sensor value for a motor speed of the driving motor detected by a speed sensor and a slope (s) of the electric bicycle according to a sensor value for a slope of the electric bicycle detected by a slope sensor, respectively.

The output value of the driving motor is a torque value ($\tau$) of the driving motor, the processor may be configured to estimate the cargo weight estimation value by using a relationship between the v, the $\tau$, the s and a summed weight (w) of the electric bicycle, and the w may be a weight obtained by adding an unladen situation weight (w0) of the electric bicycle and the cargo weight estimation value (w1).

The processor may be configured to estimate the cargo weight estimation value by using a positive correlation of the v with respect to the $\tau$ and a negative correlation of the v with respect to each of the w and the s.

The processor may be configured to estimate the cargo weight estimation value by using a relationship in which the v is changed larger with respect to the $\tau$ than the s.

According to the present invention, the processor is configured to estimate the cargo weight estimation value by using a positive correlation of the w1 with respect to a difference value ($\tau$ - dv/dt) between the $\tau$ and a differential value (dv/dt) according to time (t) of the v, and a negative correlation of the w1 with respect to each of the s and the w0.

The processor may be configured to estimate the cargo weight estimation value by using a relationship in which the w1 is changed larger with respect to the difference value and the s than the w0.

The processor may be configured to generate a driving torque command obtained by adding an output amount according to the cargo weight to an output of the driving motor in an unladen situation and transmit the generated driving torque command to the driving motor.

The electric bicycle may travel by driving the driving motor according to a signal according to a pedal force of the driver without a chain.

A control method according to the present invention is performed in a control system for an electric bicycle providing a pedal feeling to a driver by providing a pedal load according to driving of a pedal motor, and providing a pedal load of a predetermined range from the pedal motor even when a change is in a cargo weight obtained by adding a weight of the driver and a weight of a loaded object, the method comprising: estimating the cargo weight based on an output value of a driving motor that provides a driving force for traveling of the electric bicycle and traveling data of the electric bicycle; and generating a pedal torque command corresponding to the cargo weight estimation value and transmitting the pedal torque command to the pedal motor.

The transmitting includes calculating a correction output obtained by removing an output amount by the cargo weight estimation value from an output of the driving motor and generating the pedal torque command corresponding to the calculated correction output.

The traveling data includes a speed (v) of the electric bicycle according to a sensor value for a motor speed of the driving motor detected by a speed sensor and a slope (s) of the electric bicycle according to a sensor value for a slope of the electric bicycle detected by a slope sensor, respectively.

The output value of the driving motor is a torque value ($\tau$) of the driving motor, the estimating includes estimating the cargo weight estimation value by using a relationship between the v, the $\tau$, the s and a summed weight (w) of the electric bicycle, and the w is a weight obtained by adding an unladen situation weight (w0) of the electric bicycle and the cargo weight estimation value (w1).

The estimating may include estimating the cargo weight estimation value by using a positive correlation of the v with respect to the $\tau$, a negative correlation of the v with respect to each of the w and the s, and a relationship in which the v is changed larger with respect to the $\tau$ than the s.

The estimating may include estimating the cargo weight estimation value by using a positive correlation of the w1 with respect to a difference value ($\tau$ - dv/dt) between the $\tau$ and a differential value (dv/dt) according to time (t) of the v, a negative correlation of the w1 with respect to each of the s and the w0, and a relationship in which the w1 is changed larger with respect to the difference value and the s than the w0.

An electric bicycle comprising the control system according to the present invention includes a pedal control apparatus configured to provide a pedal feeling to a driver by driving a pedal motor according to a pedal torque command to provide a pedal load; a driving control apparatus configured to provide driving force of traveling by driving a driving motor according to a driving torque command; and a main controller configured to control generation of the driving torque command, and control generation of the pedal torque command such that a pedal load of a predetermined range is provided from the pedal motor even when a change is in a cargo weight obtained by adding a weight of the driver and a weight of a loaded object.

The main controller may be configured to control to estimate the cargo weight based on an output value of the driving motor and traveling data, and control to generate the pedal torque command corresponding to the cargo weight estimation value.

The electric bicycle according to an embodiment of the present disclosure may travel by driving the driving motor according to a signal according to a pedal force of the driver without a chain.

### [Advantageous Effects]

The present disclosure configured as described above has an advantage of providing a consistent pedal load regardless of a change in a cargo weight.

That is, the present disclosure can provide a pedal load of a predetermined level even when a cargo weight is increased, and thus can provide improved traveling convenience than the related art.

The effects of the present disclosure are not limited to those mentioned above, and other effects not mentioned will be clearly understood by those of ordinary skill in the art from the following description.

### [Brief Description of Drawings]

FIG. 1 illustrates a schematic block diagram of a control system 100 for an electric bicycle according to an embodiment of the present disclosure.

FIG. 2 illustrates a more detailed block diagram of a control system 100 for an electric bicycle according to an embodiment of the present disclosure.

FIG. 3 illustrates a block diagram of a detailed configuration related to control performed by a main controller 130.

FIG. 4 illustrates a schematic flowchart of a control method according to an embodiment of the present disclosure.

### [Modes of the Invention]

The above-mentioned objects, means, and effects thereof of the present disclosure will become more apparent from the following detailed description in relation to the accompanying drawings, and accordingly, those skilled in the art to which the present disclosure belongs will be able to easily practice the technical idea of the present disclosure. In addition, in describing the present disclosure, when it is determined that a detailed description of a related known technology may unnecessarily obscure the subject matter of the present disclosure, the detailed description will be omitted.

The terms used in this specification are for the purpose of describing embodiments only and are not intended to limit the present disclosure. In this specification, the singular forms "a,", "an," and "the" also include plural forms in some cases unless otherwise specified in the context. In this specification, terms such as "include", "comprise", "provide" or "have" do not exclude the presence or addition of one or more other elements other than elements mentioned.

In this specification, the terms such as "or" and "at least one" may represent one of the words listed together or a combination of two or more. For example, "A or B" and "at least one of A and B" may include only one of A or B, or may also include both A and B.

In this specification, descriptions according to "for example", etc. may not exactly match the information presented, such as the recited properties, variables, or values, and effects such as modifications, including tolerances, measurement errors, limits of measurement accuracy, and other commonly known factors should not limit the modes for carrying out the invention according to the various exemplary embodiments of the present disclosure.

In this specification, when an element is described as being "connected" or "linked" to another element, it will be understood that it may be directly connected or linked to the other element, but intervening elements may also be present. On the other hand, when an element is referred to as being "directly connected" or "directly linked" to another element, it will be understood that there are no intervening elements present.

In this specification, when an element is described as being "on" or "adjacent to" another element, it will be understood that it may be directly "on" or "connected to" the other element, but intervening elements may also be present. On the other hand, when an element is described as being "directly on" or "directly adjacent to" another element, it will be understood that there are no intervening elements present. Other expressions describing the relationship between the elements, for example, "between" and "directly between", and the like can be construed similarly.

In this specification, terms such as "first" and "second" may be used to describe various elements, but, the above elements should not be limited by the terms above. In addition, the above terms should not be construed as limiting the order of each element, and may be used for the purpose of distinguishing one element from another. For example, a "first element" may be named as a "second element" and similarly, a "second element" may also be named as a "first element."

In addition, the positive correlation between x and y may correspond to a relationship in which y value is increased as x value is increased and y value is decreased as x value is decreased. On the contrary, the negative correlation between x and y may correspond to a relationship in which y value is decreased as x value is increased and y value is increased as x value is decreased.

Unless otherwise defined, all terms used in this specification may be used with meanings commonly understood by those of ordinary skill in the art to which the present disclosure belongs. In addition, terms defined in a commonly used dictionary are not interpreted ideally or excessively unless explicitly and specifically defined.

Hereinafter, a preferred embodiment according to the present disclosure will be described in detail with reference to the accompanying drawings.

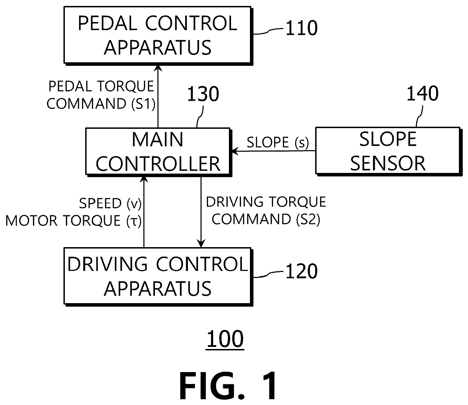

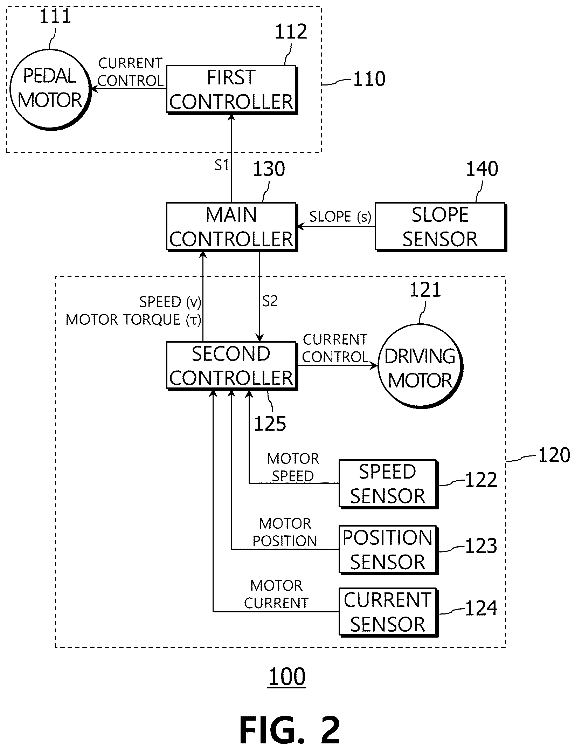

FIG. 1 illustrates a schematic block diagram of a control system 100 for an electric bicycle according to an embodiment of the present disclosure, and FIG. 2 illustrates a more detailed block diagram of a control system 100 for an electric bicycle according to an embodiment of the present disclosure.

An electric bicycle (hereinafter, referred to as "the present bicycle") according to an embodiment of the present disclosure is an electric bicycle that is a type of stepping on pedal by a driver, and uses a driving force of a driving motor 121 generated according to a force that the driver steps on the pedal (hereinafter, referred to as "pedal force"). The present bicycle may include first and second methods.

In this case, the first method is a method in which power according to a driver's pedal force is transmitted to a wheel through a chain, like a general bicycle, and the driving force of the driving motor 121 is additionally assisted and used to the transmitted power.

In the case of the first method, the basic power is that the user steps on the pedal to drive the wheel. Accordingly, in the first method, while the rotation of the pedal is connected to the rear wheel through the chain, the user can feel a resistance transmitted to the pedal.

On the other hand, the second method is a method in which a signal according to a pedal force of the driver is generated without a chain, and the driving motor 121 is driven for traveling according to the corresponding signal. For example, the second method may convert the pedal force of the driver into electricity to charge a battery (not shown), and drive the driving motor 121 using the electric energy of the corresponding battery.

In the case of the second method, since the pedal force of the driver is not directly transmitted to the rear wheel of the electric bicycle because there is no chain, the user cannot feel a resistance of the pedal. To improve this, in the second method, a load may be provided to the pedal, thereby providing a feeling of stepping on the pedal (i.e., a pedal feeling) to the driver.

The control system 100 (hereinafter, referred to as "the present system") according to an embodiment of the present disclosure is a system for respectively controlling a pedal load and a traveling driving in the present bicycle. In particular, the present system 100 performs a control for removing a variability of a pedal feeling (pedal load) according to a weight of a cargo loaded on the present bicycle. That is, the present system 100 performs a control for providing a consistent pedal load (i.e., resistance force) regardless of a change in weight of a cargo loaded on the present bicycle.

Meanwhile, the cargo means to include additionally loaded objects in addition to the driver riding the present bicycle. That is, the weight of the cargo includes the weight of additionally loaded objects in addition to the weight of the driver riding the present bicycle.

In particular, the pedal load has a characteristic that varies according to the cargo weight in the present bicycle. For example, in the related art, the pedal load may have a characteristic of a positive correlation (e.g., a proportional relationship) that it increases along with an increase in the cargo weight and decreases along with a decrease in the cargo weight. The present system 100 corresponds to a technology for solving a problem of the related art with respect to an electric bicycle corresponding to such a characteristic. In this case, since the second method electric bicycle generally has the above-described characteristic, the present system 100 may be applied to the second method electric bicycle. However, even in the case of the first method electric bicycle, the above-described characteristic may also be provided, and the present system 100 may be applied to the first method electric bicycle only in this case.

Specifically, as illustrated in FIGS. 1 and 2, the present system 100 may include a pedal control apparatus 110, a driving control apparatus 120, a main controller 130, and a slope sensor 140.

The pedal control apparatus 110 controls a load provided to the pedal of the present bicycle to provide an appropriate pedal feeling for a user. To this end, referring to FIG. 2, the pedal control apparatus 110 may include a pedal motor 111 connected to the pedal and a first controller 112 that controls driving of the pedal motor 111 through current control of the pedal motor 111. In this case, the pedal motor 111 corresponds to a motor that provides a pedal feeling to the pedal of the present bicycle. That is, the first controller 112 may control a degree of the pedal load (i.e., pedal feeling) provided to the user by controlling the driving of the pedal motor 111.

For example, the main controller 130 may generate a pedal torque command signal S1 for providing a pedal load (a pedal load having a magnitude according to a positive correlation with respect to the magnitude of a corrected output, for example, a pedal load having a magnitude according to a proportional relationship with respect to the magnitude of a corrected output), which reflects a correction output of the driving motor 121, and may transmit the generated pedal torque command signal S1 to the first controller 112. Accordingly, the first controller 112 may control the driving of the pedal motor 111 according to the pedal torque command signal S1 corresponding to the correction output of the driving motor 121.

The first controller 112 may include a processor (not shown) and a memory (not shown). The processor may control the overall operations of the pedal control apparatus 110 and the first controller 112 by using information stored in the memory. The memory may store programs for processing or control by the processor and various data for operations of the pedal control apparatus 110 and the first controller 112.

Of course, the pedal control apparatus 110 may further include other components in addition to the pedal motor 111 and the first controller 112 described above.

For example, the pedal control apparatus 110 may further include a speed sensor (not shown) for detecting a speed (i.e., a rotation speed) of the pedal motor 111, a position sensor (not shown) for detecting a position (i.e., a position of a rotor) of the pedal motor 111, a current sensor (not shown) for detecting a current applied to the pedal motor 111, and the like. In this case, the sensor value detected by the speed sensor, the position sensor, the current sensor, and the like may be transmitted to the first controller 112. In addition, the first controller 112 may calculate an output of the pedal motor 111 (i.e., a torque generated by the pedal motor 111) by using each sensor value received, and may transmit the calculated corresponding torque value to the main controller 130.

In addition, the pedal control apparatus 110 may further include an inverter or the like for outputting a current for driving the pedal motor 111 according to a control signal of the first controller 112. In this case, the first controller 112 may control the operation of the corresponding inverter according to the pedal torque command signal S1 transmitted from the main controller 130 to control the current output from the corresponding inverter to the pedal motor 111, and thus may control driving of the pedal motor 111 for providing a pedal feeling.

The driving control apparatus 120 is a component that controls the driving of traveling of the present bicycle. To this end, referring to FIG. 2, the driving control apparatus 120 may include a driving motor 121 connected to a wheel of the present bicycle, a plurality of sensors 122, 123, and 124 for detecting various states (i.e., speed, position, and current of the motor) related to the driving motor 121, and a second controller 125 for controlling the driving of the driving motor 121. In this case, the driving motor 121 is a motor that provides power to the wheel of the present bicycle and corresponds to a motor that provides a driving force for traveling of the present bicycle. That is, the second controller 125 may control the traveling power of the present bicycle by controlling the driving of the driving motor 121.

The second controller 125 may receive sensor values for various states related to the driving motor 121 from the plurality of sensors 122, 123, and 124. In this case, the plurality of sensors 122, 123, and 124 may include a speed sensor 122 for detecting a speed (i.e., a rotation speed) of the driving motor 121, a position sensor 123 for detecting a position (i.e., a position of a rotor) of the driving motor 121, a current sensor 124 for detecting a current applied to the driving motor 121, and the like.

In particular, the second controller 125 may calculate an output of the driving motor 121 (i.e., a torque generated by the driving motor 121) by using each sensor value received. For example, the second controller 125 may calculate a torque generated by the driving motor 121 by using a sensor value of a motor current detected by the current sensor 124 and a sensor value of a motor position detected by the position sensor 123. Of course, the second controller 125 may calculate the torque of the driving motor 121 by additionally using a sensor value for the motor speed detected by the speed sensor 122.

In addition, the second controller 125 may provide data necessary for various controls performed by the main controller 130 to be described later. That is, the second controller 125 may transmit the motor speed detected by the speed sensor 122, the torque value of the driving motor 121 calculated as described above, and the like to the main controller 130.

The second controller 125 may include a processor (not shown) and a memory (not shown). The processor may control the overall operations of the driving control apparatus 120 and the second controller 125 by using information stored in the memory. The memory may store programs for processing or control by the processor and various data for operations of the driving control apparatus 120 and the second controller 125.

Of course, the driving control apparatus 120 may further include other components in addition to the driving motor 121, sensors 122, 123, 124 and the second controller 125 described above. For example, the driving control apparatus 120 may further include an inverter or the like for outputting a current for driving the driving motor 121 according to a control signal of the second controller 125. In this case, the second controller 125 may control the operation of the corresponding inverter according to a driving torque command signal S2 transmitted from the main controller 130 to control the current output from the corresponding inverter to the driving motor 121, and thus may control driving of the driving motor 121 for providing traveling power of the present bicycle.

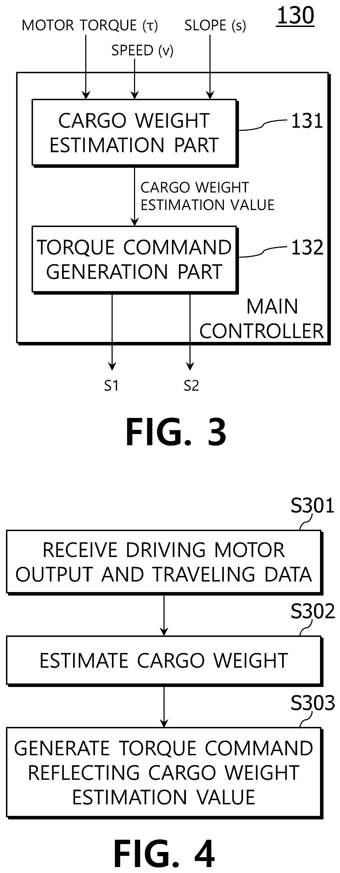

FIG. 3 illustrates a block diagram of a detailed configuration related to control performed by a main controller 130.

The main controller 130 performs control necessary to provide a consistent pedal load regardless of a change in a cargo weight and control necessary to provide a constant acceleration performance for the present bicycle regardless of whether it is in an unladen situation or loaded situation.

To this end, the main controller 130 may include a processor (not shown) and a memory (not shown). That is, the processor may control the overall operations of the present system 100 and the main controller 130 by using information stored in the memory. The memory may store programs for processing or control by the processor and various data for operations of the present system 100 and the main controller 130. That is, the memory may store various types of information according to S301 to S303 of a control method to be described below, and particularly, may store programs for processing or controlling according to S302 and S303.

For example, in the first controller 112, the second controller 125, and the main controller 130, the memory may include volatile memories such as S-RAM, D-RAM, and the like, and nonvolatile memories such as flash memory, ROM (Read Only Memory), EPROM (Erasable Programmable Read Only Memory), and the like.

To perform the above-described control, the main controller 130 may include a cargo weight estimation part 131 and a torque command generation part 132 as illustrated in FIG. 3. In this case, the cargo weight estimation part 131 and the torque command generation part 132 may be a hardware configuration (e.g., a configuration included in a processor) of the main controller 130 or a software configuration (e.g., a process performed by a processor) performed by the main controller 130, but the present disclosure is not limited thereto.

However, detailed control performed by the main controller 130 (i.e., detailed control performed by the cargo weight estimation part 131 and the torque command generation part 132) will be described in more detail in a control method to be described below.

FIG. 4 illustrates a schematic flowchart of a control method according to an embodiment of the present disclosure.

A control method (hereinafter, referred to as a "the present control method") according to an embodiment of the present disclosure is a control method performed to provide a consistent pedal load regardless of a change in a cargo weight. In addition, the present control method is a control method performed to provide a constant acceleration performance for the present bicycle regardless of whether it is in an unladen situation or loaded situation. Such a present control method may be performed in the present system 100, and more particularly, may be performed according to a control of the main controller 130.

Specifically, the present control method may include S301 to S303, as illustrated in FIG. 4.

First, S301 is a step in which the main controller 130 receives an output of the driving motor 121 and traveling data of the present bicycle, respectively.

In this case, the output of the driving motor 121 is a torque $\tau$ generated according to the driving of the driving motor 121 (but, represented by a motor torque in FIGS. 1 to 3), and may be calculated by the second controller 125 and transmitted to the main controller 130. For example, the second controller 125 may calculate a torque value $\tau$ generated by the driving motor 121 by using a sensor value of a motor current detected by the current sensor 124 and a sensor value of a motor position detected by the position sensor 123. Of course, the second controller 125 may calculate the torque value $\tau$ of the driving motor 121 by additionally using a sensor value for the motor speed detected by the speed sensor 122.

Meanwhile, the traveling data is data related to a traveling state of the present bicycle. Such traveling data may include a speed $v$ of the present bicycle, a slope $s$ of the present bicycle, and the like.

In this case, the speed $v$ of the present bicycle with respect to a traveling direction has a characteristic proportional to the motor speed of the driving motor 121. Accordingly, the speed $v$ of the present bicycle may be a speed with respect to a traveling direction of the present bicycle or a sensor value of a motor speed of the driving motor 121 detected by the speed sensor 122. That is, in S310, the data of the speed $v$ of the present bicycle received by the main controller 130 from the second controller 125 may be data of a sensor value of a motor speed of the driving motor 121 detected by the speed sensor 122 or speed data with respect to a traveling direction of the present bicycle derived by the second controller 125 based on the corresponding sensor value.

In addition, the slope $s$ of the present bicycle is data of a slope of the present bicycle being driven (i.e., a slope of a road on which the present bicycle is driven) and may be data of a sensor value of a slope detected and transmitted by the slope sensor 140.

That is, in S301, the cargo weight estimation part 131 of the main controller 130 may receive data of the torque $\tau$ of the driving motor 121 and the speed $v$ of the present bicycle from the second controller 125 and may receive data of the slope $s$ of the present bicycle from the slope sensor 140.

Thereafter, S302 is a step in which the main controller 130 calculates an estimation value (i.e., a cargo weight estimation value) of a weight of a cargo loaded on the present bicycle by using the data received in S301. Such control according to S302 may be performed by the cargo weight estimation part 131 of the main controller 130. That is, the cargo weight estimation part 131 may calculate a cargo weight estimation value of the present bicycle by analyzing the output of the driving motor 121 and the traveling data of the present bicycle received in S301.

Specifically, the cargo weight estimation value may be calculated by using a relationship between the speed $v$ of the present bicycle, the torque $\tau$ of the driving motor 121, the summed weight $w$ of the present bicycle, and the slope $s$ of the present bicycle. In this case, $w$ is a weight obtained by summing an original weight (i.e., a weight in an unladen situation) $w0$ of the present bicycle and a weight $w1$ of the cargo loaded on the present bicycle (i.e., $w = w0 + w1$). However, $w1$ is a weight obtained by summing a weight of a driver placed in the present bicycle and a weight of an object loaded on the present bicycle, and corresponds to a cargo weight estimation value to be calculated in the present control method.

That is, the speed v of the present bicycle is affected by a $\tau$ value that changes with time, and has a characteristic that increases as $\tau$ increases, and decreases as $\tau$ decreases. In addition, v has a characteristic that decreases as w increases, and increases as w decreases. In addition, v is affected by s value that changes with time, and has a characteristic that decreases as s increases, and increases as s decreases. As a result, v has a positive correlation (e.g., a proportional relationship) with respect to a temporal change of the $\tau$ value, and has a negative correlation (e.g., an inverse proportional relationship) with respect to w and s, respectively, and particularly, has a characteristic that is more sensitive to a temporal change of the $\tau$ value than a temporal change of the s value. In this case, the more sensitive means that a larger change occurs in a result value (i.e., v value) according to a change of a corresponding variable value. Summarizing this, it can be expressed as Equation 1 below.

[Equation 1]

$$v = a \int \{\tau - s \cdot w\} dt + b$$

Where, a and b are constant values for integration. v is a speed of the present bicycle with respect to a traveling direction, or a motor speed of the driving motor 121 detected by the speed sensor 122. That is, v may be derived from a sensor value with respect to a motor speed of the driving motor 121 detected by the speed sensor 122, and may be changed according to time t. s is a slope of the present bicycle, and may be derived based on a sensor value with respect to a slope detected and transmitted by the slope sensor 140, and may be changed according to time t. $\tau$ is a torque value corresponding to an output of the driving motor 121, and may be calculated by the second controller 125 and transmitted to the main controller 130 according to S301, and may be changed according to time t.

Meanwhile, as described above, in Equation 1, except for the cargo weight estimation value w1, data regarding the remaining variables v, $\tau$, and s may be obtained from the second controller 125 and the slope sensor 140, and data regarding an unladen situation weight w0 of the present bicycle is pre-stored in the memory. Accordingly, the cargo weight estimation value w1 that is an unknown value remaining may be calculated (estimated) using v, $\tau$, s, and w0 that can be identified with respect to a specific value.

For example, after simplifying Equation 1 by substituting 1 for a and b, respectively, and arranging the simplified Equation 1 with respect to the cargo weight estimation value w1, it can be expressed as Equation 2 below.

[Equation 2]

$$w1 = \frac{\tau - \dfrac{dv}{dt}}{s} - w0$$

Where, dv/dt is a value obtained by differentiating the speed v of the present bicycle with respect to time t. Accordingly, the cargo weight estimation part 131 of the main controller 130 may calculate the cargo weight estimation value w1 using the derived Equation 2.

That is, according to Equation 2, the cargo weight estimation value w1 has a characteristic that increases as a $\tau$ value changed with time increases, and decreases as the $\tau$ value decreases. In addition, w1 has a characteristic that decreases as a differential value (dv/dt) for a time (t) of v increases, and increases as the corresponding differential value (dv/dt) decreases. In addition, w1 has a characteristic that increases as a difference value (i.e., $\tau$ - dv/dt) between a $\tau$ value and a corresponding differential value (dv/dt) increases, and decreases as the corresponding difference value ($\tau$ - dv/dt) decreases. In addition, w1 is affected by s value that changes with time, and has a characteristic that decreases as s increases, and increases as s decreases. In addition, w1 has a characteristic that decreases as w0 increases, and increases as w0 decreases. As a result, w1 has a positive correlation (e.g., a proportional relationship) with a $\tau$ value and the aforementioned difference value (i.e., $\tau$ - dv/dt), and has a negative correlation (e.g., an inverse proportional relationship) with the aforementioned differential value (dv/dt), s and w0, respectively, and particularly, has a characteristic that is more sensitive to the $\tau$ value, the aforementioned difference value (i.e., $\tau$ - dv/dt) and the s value than the w0 value. In this case, the more sensitive means that a larger change occurs in a result value (i.e., w1 value) according to a change of a corresponding variable value.

That is, the cargo weight estimation part 131 of the main controller 130 may calculate the cargo weight estimation value w1 by using the characteristics of the aforementioned variable values ($\tau$ - dv/dt, s, w0).

Thereafter, S303 corresponds to a step in which the main controller 130 generates various torque command signals S1 and S2 that reflect the cargo weight estimation value calculated in S302. Such control according to S303 may be performed by the torque command generation part 132 of the main controller 130.

In this case, the torque command generation part 132 calculates an output amount $\tau_c$ according to the cargo weight estimation value. That is, the output of the driving motor 121 (i.e., the torque $\tau$ generated according to the driving of the driving motor 121) includes the contribution amount according to the cargo weight according to the cargo loading. For example, as the cargo weight is heavier, the output $\tau$ of the driving motor 121 may be increased while more output $\tau_c$ is included. The $\tau_c$ corresponds to the output amount according to the cargo loading (hereinafter, may be differently referred to as a "cargo weight estimation value torque").

The torque command generation part 132 may calculate a correction output (i.e., a torque value, $\tau_n$) for the driving motor 121 according to $\tau_c$, and generate a pedal torque command signal S1 for providing a pedal load (i.e., a pedal load having a magnitude according to a positive correlation with respect to the magnitude of the correction output/for example, a pedal load having a magnitude according to a proportional relationship with respect to the magnitude of the correction output) that reflects the calculated correction output $\tau_n$ (hereinafter, this state is referred to as a "post-correction state"). In this case, the "correction output $\tau_n$" means an output (that is, $\tau_n = \tau - \tau_c$) obtained by removing the output amount $\tau_c$ corresponding to the cargo weight estimation value calculated according to the cargo weight estimation value calculated according to the cargo weight estimation value torque S302 from the output $\tau$ of the driving motor 121.

That is, the torque command generation part 132 generates a pedal torque command signal S1 corresponding to the cargo weight estimation value and transmits it to the first controller 112, and the first controller 112 controls the driving of the pedal motor 111 by corresponding to the transmitted pedal torque command signal S1. In this case, the pedal torque command signal S1 may have a torque magnitude value according to a positive correlation (e.g., a proportional relationship) with respect to the magnitude of the correction output $\tau_n$ of the driving motor 121. In addition, the first controller 112 may control the driving of the pedal motor 111 to generate a pedal load having a magnitude according to a positive correlation (e.g., a proportional relationship) with respect to the torque magnitude value of the transmitted pedal torque command signal S1. Accordingly, in the pedal motor 111, a pedal load having a magnitude according to a positive correlation (e.g., a proportional relationship) with respect to the magnitude of the correction output $\tau_n$ may be generated. In this case, as the pedal load increases, the pedal may be rotated only when a larger pedal force is provided from the driver. On the contrary, as the pedal load decreases, the pedal may be easily rotated even if a smaller pedal force is provided from the driver.

However, since the correction output (that is, $\tau_n = \tau - \tau_c$) of the driving motor 121 obtained by removing the output amount $\tau_c$ corresponding to the cargo weight estimation value from the output $\tau$ of the driving motor 121 is reflected in the pedal torque command signal S1, even if the cargo is loaded in the present bicycle and the weight thereof is increased, the corresponding correction output $\tau_n$ has a value in the same range (that is, a consistent range) as the output of the driving motor 121 in the case where the present bicycle is in an unladen situation.

Accordingly, the pedal torque command signal S1 having a certain magnitude value regardless of the change in the cargo weight may be generated by the torque command generation part 132 and transmitted to the first controller 112. As a result, in the post-correction state, the pedal motor 111 may provide a consistent pedal load regardless of the change in the cargo weight. That is, even if the cargo weight increases, the pedal motor 111 may provide a pedal load having a certain level (that is, a pedal load in the same range as the pedal load generated in the case where the present bicycle is in an unladen situation) (hereinafter, the effect is referred to as a "first effect"). According to the first effect, a pedal feeling like an unladen situation may be provided to the driver regardless of the change in the cargo weight.

Next, a state before the pedal torque command signal S1 corresponding to the above-described correction output $\tau_n$ is generated (hereinafter, referred to as "pre-correction state") will be described.

In the pre-correction state, the driving motor 121 generates an output corresponding to $\tau$. In this case, the $\tau$ is an output according as the second controller 125 controls the driving of the driving motor 121 according to the driving torque command signal S2 generated for the driving of the present bicycle having a weight (that is, the unladen weight + the cargo weight) including the weight of the cargo. Accordingly, $\tau$ corresponds to an output (that is, $\tau = \tau_0 + \tau_{c1}$) obtained by adding an output amount $\tau_{c1}$ corresponding to a cargo weight to the output $\tau_0$ of the driving motor 121 in the unladen situation.

That is, in the pre-correction state, the torque command generation part 132 generates a driving torque command signal S2 corresponding to the cargo weight and transmits it to the second controller 125, and the second controller 125 controls the driving of the driving motor 121 by corresponding to the transmitted driving torque command signal S2. In this case, the driving torque command signal S2 may have a torque magnitude value according to a positive correlation (e.g., a proportional relationship) with respect to the magnitude of the output $\tau$ of the driving motor 121. In addition, the second controller 125 may control the driving of the driving motor 121 to generate a driving force having a magnitude according to a positive correlation (e.g., a proportional relationship) with respect to the torque magnitude value of the transmitted driving torque command signal S2.

According to the generation of the driving torque command signal S2 corresponding to the cargo weight, constant acceleration performance for the present bicycle regardless of the unladen situation or the loaded situation may be provided (i.e., the same acceleration of the present bicycle may be performed with the same similar pedal force of the driver regardless of whether the cargo weight is heavy or light) (hereinafter, the effect is referred to as a "second effect").

Meanwhile, in the post-correction state, the above-described correction output ($\tau_n = \tau - \tau_c$) of the driving motor 121 is calculated. In this case, $\tau_c$ corresponds to an output amount corresponding to the cargo weight estimation value. In this case, according to the control of the post-correction state described above, $\tau_c$ is calculated (estimated) as a value similar to $\tau_{c1}$ of the pre-correction state. Since $\tau_0 = \tau - \tau_{c1}$, regardless of the change in the cargo weight, the correction output $\tau_n$ of the driving motor 121 has a value in the same range as the output $\tau_0$ of the driving motor 121 in the unladen situation. As a result, the pedal load of the pedal motor 111 driven according to the pedal torque command signal S1 corresponding to the correction output $\tau_n$ of the corresponding driving motor 121 may correspond to the pedal load in the same range as the pedal load generated when the present bicycle is in the unladen situation.

In addition, according to the first and second effects described above, the present system 100 may provide the driver with improved traveling convenience.

**<Description of Symbols>**

| | | | |
|---|---|---|---|
| 100: | control system | 110: | pedal control apparatus |
| 111: | pedal motor | 112: | first controller |
| 120: | driving control apparatus | 121: | driving motor |
| 122: | speed sensor | 123: | position sensor |
| 124: | current sensor | 130: | main controller |
| 140: | slope sensor | | |

**Claims**

1. A control system (100) for an electric bicycle providing a pedal feeling to a driver by providing a pedal load according to driving of a pedal motor (111), the control system (100) comprising:

   a memory; and
   a processor configured to perform control using information stored in the memory such that a pedal load of a predetermined range is provided from the pedal motor (111) even when a change is in a cargo weight obtained by adding a weight of the driver and a weight of a loaded object,
   wherein the processor is configured to estimate the cargo weight based on an output value of a driving motor (121) providing a driving force for traveling of the electric bicycle and traveling data of the electric bicycle, generate a pedal torque command corresponding to a cargo weight estimation value (w1), and transmit the pedal torque command to the pedal motor (111),
   wherein the traveling data comprises a speed (v) of the electric bicycle according to a sensor value for a motor speed of the driving motor (121) detected by a speed sensor (122) and a slope (s) of the electric bicycle according to a sensor value for a slope (s) of the electric bicycle detected by a slope sensor (140), respectively, **characterised in that** the cargo weight comprises

   the weight of the driver and additionally loaded objects, and

   wherein the output value of the driving motor (121) is a torque value ($\tau$) of the driving motor (121), the processor is configured to estimate the cargo weight estimation value (w1) by using a relationship between the speed (v), the torque value ($\tau$), the slope (s) and a summed weight (w) of the electric bicycle, and the summed weight (w) is a weight obtained by adding an unladen situation weight (w0) of the electric bicycle and the cargo weight estimation value (w1) and,
   wherein the processor is configured to estimate the cargo weight estimation value (w1) by using a positive correlation of the cargo weight estimation value (w1) with respect to a difference value ($\tau - dv/dt$) between the torque value ($\tau$) and a differential value (dv/dt) according to time (t) of the speed (v), and a negative correlation of the cargo weight estimation value (w1) with respect to each of the slope (s) and the unladen situation weight (w0).

2. The control system (100) of claim 1, wherein the processor is configured to calculate a correction output obtained by removing an output amount by the cargo weight estimation value (w1) from an output of the driving motor (121), and generate the pedal torque command corresponding to the calculated correction output.

3. The control system (100) of claim 2, wherein a magnitude value of the pedal torque command has a value of a positive correlation with respect to the correction output.

4. The control system (100) of claim 1, wherein the output value of the driving motor (121) is a torque value of the driving motor (121) calculated by using a sensor value for a current of the driving motor (121) detected by a current sensor (124) and a sensor value for a position of the driving motor (121) detected by a position sensor (123), respectively.

5. The control system (100) of claim 1, wherein the processor is configured to estimate the cargo weight estimation value (w1) by using a positive correlation of the speed (v) with respect to the torque value ($\tau$) and a negative correlation of the speed (v) with respect to each of the summed weight (w) and the slope (s).

6. The control system (100) of claim 5, wherein the processor is configured to estimate the cargo weight estimation value (w1) by using a relationship in which the speed (v) is changed larger with respect to the torque value ($\tau$) than the slope (s).

7. The control system (100) of claim 1, wherein the processor is configured to estimate the cargo weight estimation value (w1) by using a relationship in which the cargo weight estimation value (w1) is changed larger with respect to the difference value and the slope (s) than the unladen situation weight (w0).

8. The control system (100) of claim 1, wherein the processor is configured to generate a driving torque command obtained by adding an output amount according to the cargo weight to an output of the driving motor (121) in an unladen situation and transmit the generated driving torque command to the driving motor (121).

9. The control system (100) of claim 1, wherein the electric bicycle travels by driving the driving motor (121) according to a signal according to a pedal force of the driver without a chain.

10. A control method performed in a control system (100) for an electric bicycle providing a pedal feeling to a driver by providing a pedal load according to driving of a pedal motor (111), and providing a pedal load of a predetermined range from the pedal motor (111) even when a change is in a cargo weight obtained by adding a weight of the driver and a weight of a loaded object, the method comprising:

    estimating the cargo weight based on an output value of a driving motor (121) that provides a driving force for traveling of the electric bicycle and traveling data of the electric bicycle; and
    generating a pedal torque command corresponding to a cargo weight estimation value (w1) and transmitting the pedal torque command to the pedal motor (111),
    wherein the transmitting comprises calculating a correction output obtained by removing an output amount by the cargo weight estimation value (w1) from an output of the driving motor (121) and generating the pedal torque command reflecting the calculated correction output, and
    wherein the traveling data comprises a speed (v) of the electric bicycle according to a sensor value for a motor speed of the driving motor (121) detected by a speed sensor (122) and a slope (s) of the electric bicycle according to a sensor value for a slope (s) of the electric bicycle detected by a slope sensor (140), respectively,
    **characterised in that** the cargo weight comprises the weight of the driver and additionally loaded objects,
    wherein the output value of the driving motor may be a torque value ($\tau$) of the driving motor (121), the estimating includes estimating the cargo weight estimation value (w1) by using a relationship between the speed (v), the torque value ($\tau$), the slope (s) and a summed weight (w) of the electric bicycle, and the summed weight (w) is a weight obtained by adding an unladen situation weight (w0) of the electric bicycle and the cargo weight estimation value (w1) and
    wherein the estimating further includes estimating the cargo weight estimation value (w1) by using a positive correlation of the cargo weight estimation value (w1) with respect to a difference value ($\tau$ - dv/dt) between the torque value ($\tau$) and a differential value (dv/dt) according to time (t) of the speed (v), a negative correlation of the cargo weight estimation value (w1) with respect to each of the slope (s) and the unladen situation weight (w0), and a relationship in which the cargo weight estimation value (w1) is changed larger with respect to the difference value and the slope (s) than the unladen situation weight (w0).

11. An electric bicycle comprising the control system (100) according to claim 1, comprising: a pedal control apparatus (110) configured to provide a pedal feeling to a driver by driving a pedal motor (111) according to a pedal torque command to provide a pedal load;

    a driving control apparatus (120) configured to provide driving force of traveling by driving a driving motor (121) according to a driving torque command; and

a main controller (130) configured to control generation of the driving torque command, and control generation of the pedal torque command such that a pedal load of a predetermined range is provided from the pedal motor (111) even when a change is in a cargo weight obtained by adding a weight of the driver and a weight of a loaded object, wherein the main controller (130) is configured to control to estimate the cargo weight based on an output value of the driving motor (121) and traveling data, and control to generate the pedal torque command corresponding to the cargo weight estimation value (w1).

**Patentansprüche**

1. Steuersystem (100) für ein Elektrofahrrad, das einem Fahrer ein Pedalgefühl vermittelt, indem es eine Pedallast entsprechend dem Antrieb eines Pedalmotors (111) bereitstellt, wobei das Steuersystem (100) Folgendes umfasst:

   einen Speicher; und
   einen Prozessor, der dazu konfiguriert ist, eine Steuerung unter Verwendung von im Speicher gespeicherten Informationen durchzuführen, so dass eine Pedallast eines vorbestimmten Bereichs vom Pedalmotor (111) bereitgestellt wird, selbst wenn sich ein Ladegewicht, das sich aus einem Gewicht des Fahrers und einem Gewicht eines geladenen Gegenstands ergibt, ändert,
   wobei der Prozessor dazu konfiguriert ist, das Ladegewicht auf der Grundlage eines Ausgangswerts eines Antriebsmotors (121), der eine Antriebskraft für die Fahrt des Elektrofahrrads bereitstellt, und von Fahrdaten des Elektrofahrrads zu schätzen, einen Pedaldrehmomentbefehl entsprechend einem Ladegewicht-Schätzwert (w1) zu erzeugen und den Pedaldrehmomentbefehl an den Pedalmotor (111) zu übertragen,
   wobei die Fahrdaten eine Geschwindigkeit (v) des Elektrofahrrads gemäß einem Sensorwert für eine Motordrehzahl des Antriebsmotors (121), der von einem Drehzahlsensor (122) erfasst wird, und eine Steigung (s) des Elektrofahrrads gemäß einem Sensorwert für eine Steigung (s) des Elektrofahrrads, der von einem Steigungssensor (140) erfasst wird, umfassen,
   **dadurch gekennzeichnet, dass** das Ladegewicht Folgendes umfasst
   das Gewicht des Fahrers und zusätzlich geladener Gegenstände, und
   wobei der Ausgangswert des Antriebsmotors (121) ein Drehmomentwert (T) des Antriebsmotors (121) ist, wobei der Prozessor dazu konfiguriert ist, den Ladegewicht-Schätzwert (w1) unter Verwendung einer Beziehung zwischen der Geschwindigkeit (v), dem Drehmomentwert (T), der Steigung (s) und einem summierten Gewicht (w) des Elektrofahrrads zu schätzen, wobei das summierte Gewicht (w) ein Gewicht ist, das durch Addition eines Leergewichts (w0) des Elektrofahrrads und des Ladegewicht-Schätzwerts (w1) erhalten wird, und
   wobei der Prozessor dazu konfiguriert ist, den Ladegewicht-Schätzwert (w1) unter Verwendung einer positiven Korrelation des Ladegewicht-Schätzwerts (w1) in Bezug auf einen Differenzwert (T - dv/dt) zwischen dem Drehmomentwert (T) und einem Differenzwert (dv/dt) entsprechend der Zeit (t) der Geschwindigkeit (v) und einer negativen Korrelation des Ladegewicht-Schätzwerts (w1) in Bezug auf die Steigung (s) und das Leergewicht (w0) zu schätzen.

2. Steuersystem (100) nach Anspruch 1, wobei der Prozessor dazu konfiguriert ist, eine Korrekturausgabe zu berechnen, die durch Entfernen einer Ausgabemenge um den Ladegewicht-Schätzwert (w1) aus einer Ausgabe des Antriebsmotors (121) erhalten wird, und den Pedaldrehmomentbefehl entsprechend der berechneten Korrekturausgabe zu erzeugen.

3. Steuersystem (100) nach Anspruch 2, wobei ein Größenwert des Pedaldrehmomentbefehls einen Wert aufweist, der in positiver Korrelation zur Korrekturausgabe steht.

4. Steuersystem (100) nach Anspruch 1, wobei der Ausgangswert des Antriebsmotors (121) ein Drehmomentwert des Antriebsmotors (121) ist, der unter Verwendung eines Sensorwerts für einen von einem Stromsensor (124) erfassten Strom des Antriebsmotors (121) und eines Sensorwerts für eine von einem Positionssensor (123) erfasste Position des Antriebsmotors (121) berechnet wird.

5. Steuersystem (100) nach Anspruch 1, wobei der Prozessor dazu konfiguriert ist, den Ladegewicht-Schätzwert (w1) unter Verwendung einer positiven Korrelation der Geschwindigkeit (v) in Bezug auf den Drehmomentwert (T) und einer negativen Korrelation der Geschwindigkeit (v) in Bezug auf das summierte Gewicht (w) und die Steigung (s) zu schätzen.

6. Steuersystem (100) nach Anspruch 5, wobei der Prozessor dazu konfiguriert ist, den Ladegewicht-Schätzwert (w1) unter Verwendung einer Beziehung zu schätzen, bei der sich die Geschwindigkeit (v) in Bezug auf den Drehmomentwert (T) stärker ändert als die Steigung (s).

7. Steuersystem (100) nach Anspruch 1, wobei der Prozessor dazu konfiguriert ist, den Ladegewicht-Schätzwert (w1) unter Verwendung einer Beziehung zu schätzen, bei der sich der Ladegewicht-Schätzwert (w1) in Bezug auf den Differenzwert und die Steigung (s) stärker ändert als das Leergewicht (w0).

8. Steuersystem (100) nach Anspruch 1, wobei der Prozessor dazu konfiguriert ist, einen Antriebsdrehmomentbefehl zu erzeugen, der durch Addieren einer Ausgabemenge entsprechend dem Ladegewicht zu einer Ausgabe des Antriebsmotors (121) in einem unbeladenen Zustand erhalten wird, und den erzeugten Antriebsdrehmomentbefehl an den Antriebsmotor (121) zu übertragen.

9. Steuersystem (100) nach Anspruch 1, wobei das Elektrofahrrad durch Antreiben des Antriebsmotors (121) gemäß einem Signal entsprechend einer Pedalkraft des Fahrers ohne Kette fährt.

10. Steuerverfahren, das in einem Steuersystem (100) für ein Elektrofahrrad durchgeführt wird, das einem Fahrer ein Pedalgefühl vermittelt, indem es eine Pedallast entsprechend dem Antrieb eines Pedalmotors (111) bereitstellt, und eine Pedallast eines vorbestimmten Bereichs vom Pedalmotor (111) bereitstellt, selbst wenn sich ein Ladegewicht, das sich aus einem Gewicht des Fahrers und einem Gewicht eines geladenen Gegenstands ergibt, ändert, wobei das Verfahren Folgendes umfasst:

Schätzen des Ladegewichts auf der Grundlage eines Ausgangswerts eines Antriebsmotors (121), der eine Antriebskraft für die Fahrt des Elektrofahrrads bereitstellt, und von Fahrdaten des Elektrofahrrads; und Erzeugen eines Pedaldrehmomentbefehls entsprechend einem Ladegewicht-Schätzwert (w1) und Übertragen des Pedaldrehmomentbefehls an den Pedalmotor (111), wobei das Übertragen das Berechnen einer Korrekturausgabe, die durch Entfernen einer Ausgabemenge um den Ladegewicht-Schätzwert (w1) aus einer Ausgabe des Antriebsmotors (121) erhalten wird, und das Erzeugen des Pedaldrehmomentbefehls, der die berechnete Korrekturausgabe widerspiegelt, umfasst, und wobei die Fahrdaten eine Geschwindigkeit (v) des Elektrofahrrads gemäß einem Sensorwert für eine Motordrehzahl des Antriebsmotors (121), der von einem Drehzahlsensor (122) erfasst wird, und eine Steigung (s) des Elektrofahrrads gemäß einem Sensorwert für eine Steigung (s) des Elektrofahrrads, der von einem Steigungssensor (140) erfasst wird, umfassen, **dadurch gekennzeichnet, dass** das Ladegewicht Folgendes umfasst das Gewicht des Fahrers und zusätzlich geladener Gegenstände, wobei der Ausgangswert des Antriebsmotors ein Drehmomentwert (T) des Antriebsmotors (121) sein kann, wobei das Schätzen das Schätzen des Ladegewicht-Schätzwerts (w1) unter Verwendung einer Beziehung zwischen der Geschwindigkeit (v), dem Drehmomentwert (T), der Steigung (s) und einem summierten Gewicht (w) des Elektrofahrrads umfasst, wobei das summierte Gewicht (w) ein Gewicht ist, das durch Addieren eines Leergewichts (w0) des Elektrofahrrads und des Ladegewicht-Schätzwerts (w1) erhalten wird, und wobei das Schätzen ferner das Schätzen des Ladegewicht-Schätzwerts (w1) unter Verwendung einer positiven Korrelation des Ladegewicht-Schätzwerts (w1) in Bezug auf einen Differenzwert (T - dv/dt) zwischen dem Drehmomentwert (T) und einem Differenzwert (dv/dt) entsprechend der Zeit (t) der Geschwindigkeit (v), einer negativen Korrelation des Ladegewicht-Schätzwerts (w1) in Bezug auf die Steigung (s) und das Leergewicht (w0) sowie einer Beziehung, bei der sich der Ladegewicht-Schätzwert (w1) in Bezug auf den Differenzwert und die Steigung (s) stärker ändert als das Leergewicht (w0), umfasst.

11. Elektrofahrrad mit dem Steuersystem (100) nach Anspruch 1, umfassend: eine Pedalsteuervorrichtung (110), die dazu konfiguriert ist, einem Fahrer ein Pedalgefühl zu vermitteln, indem sie einen Pedalmotor (111) entsprechend einem Pedaldrehmomentbefehl antreibt, um eine Pedallast bereitzustellen;

eine Antriebssteuervorrichtung (120), die dazu konfiguriert ist, eine Antriebskraft zum Fahren bereitzustellen, indem sie einen Antriebsmotor (121) gemäß einem Antriebsdrehmomentbefehl antreibt; und eine Hauptsteuerung (130), die dazu konfiguriert ist, die Erzeugung des Antriebsdrehmomentbefehls und die Erzeugung des Pedaldrehmomentbefehls so zu steuern, dass eine Pedallast eines vorbestimmten Bereichs vom Pedalmotor (111) bereitgestellt wird, selbst wenn sich ein Ladegewicht, das sich aus einem Gewicht des Fahrers und einem Gewicht eines geladenen Gegenstands ergibt, ändert, wobei die Hauptsteuerung (130) dazu konfiguriert ist, das Ladegewicht auf der Grundlage eines Ausgangswerts des Antriebsmotors (121) und von Fahrdaten zu schätzen und den Pedaldrehmomentbefehl entsprechend dem Ladegewicht-Schätzwert (w1) zu erzeugen.

**Revendications**

1. Système de commande (100) pour un vélo électrique fournissant une sensation de pédale à un conducteur en fournissant une charge de pédale en fonction d'un entraînement d'un moteur de pédale (111), le système de commande (100) comprenant :

   une mémoire, et
   un processeur configuré pour effectuer une commande sur la base d'informations stockées dans la mémoire, de sorte qu'une charge de pédale dans une plage prédéterminée soit fournie par le moteur de pédale (111) même lorsqu'un changement se produit dans le poids de cargaison obtenu en ajoutant un poids du conducteur et un poids d'un objet chargé,
   dans lequel le processeur est configuré pour estimer le poids de cargaison en fonction d'une valeur de sortie d'un moteur d'entraînement (121) fournissant une force entraîneuse pour entraîner le vélo électrique à se déplacer et des données de déplacement du vélo électrique, générer une commande de couple de pédale correspondant à une valeur estimée de poids de cargaison (w1), et transmettre la commande de couple de pédale au moteur de pédale (111),
   dans lequel les données de déplacement comprennent une vitesse (v) du vélo électrique en fonction d'une valeur de capteur pour une vitesse de moteur du moteur d'entraînement (121) détectée par un capteur de vitesse (122) et une pente (s) du vélo électrique en fonction d'une valeur de capteur pour une pente (s) du vélo électrique détectée par un capteur de pente (140), respectivement,
   **caractérisé en ce que** le poids de cargaison comprend
   le poids du conducteur et des objets additionnellement chargés, et
   dans lequel la valeur de sortie du moteur d'entraînement (121) est une valeur de couple (t) du moteur d'entraînement (121), le processeur est configuré pour estimer la valeur estimée de poids de cargaison (w1) sur la base d'une relation entre la vitesse (v), la valeur de couple (t), la pente (s) et un poids total (w) du vélo électrique, et le poids total (w) est un poids obtenu en ajoutant un poids sans charge (w0) du vélo électrique et la valeur estimée de poids de cargaison (w1) et,
   dans lequel le processeur est configuré pour estimer la valeur estimée de poids de cargaison (w1) sur la base d'une corrélation positive de la valeur estimée de poids de cargaison (w1) par rapport à une valeur de différence (t-dv/dt) entre la valeur de couple (t) et une valeur différentielle (dv/dt) en fonction d'un temps (t) de la vitesse (v), et une corrélation négative de la valeur estimée de poids de cargaison (w1) par rapport à chacune de la pente (s) et du poids sans charge (w0).

2. Système de commande (100) selon la revendication 1, dans lequel le processeur est configuré pour calculer une sortie de correction obtenue en soustrayant une quantité de sortie correspondant à la valeur estimée de poids de cargaison (w1) d'une sortie du moteur d'entraînement (121), et générer la commande de couple de pédale correspondant à la sortie de correction calculée.

3. Système de commande (100) selon la revendication 2, dans lequel une valeur de grandeur de la commande de couple de pédale correspond à une valeur d'une corrélation positive par rapport à la sortie de correction.

4. Système de commande (100) selon la revendication 1, dans lequel la valeur de sortie du moteur d'entraînement (121) est une valeur de couple du moteur d'entraînement (121) calculée sur la base d'une valeur de capteur pour un courant du moteur d'entraînement (121) détecté par un capteur de courant (124) et d'une valeur de capteur pour une position du moteur d'entraînement (121) détectée par un capteur de position (123), respectivement.

5. Système de commande (100) selon la revendication 1, dans lequel le processeur est configuré pour estimer la valeur estimée de poids de cargaison (w1) sur la base d'une corrélation positive de la vitesse (v) par rapport à la valeur de couple (t) et d'une corrélation négative de la vitesse (v) par rapport à chacun du poids total (w) et de la pente (s).

6. Système de commande (100) selon la revendication 5, dans lequel le processeur est configuré pour estimer la valeur estimée de poids de cargaison (w1) sur la base d'une relation dans laquelle la vitesse (v) présente une variation par rapport à la valeur de couple (t) supérieure à la pente (s).

7. Système de commande (100) selon la revendication 1, dans lequel le processeur est configuré pour estimer la valeur estimée de poids de cargaison (w1) sur la base d'une relation dans laquelle la valeur estimée de poids de cargaison (w1) présente une variation par rapport à la valeur de différence et à la pente (s) supérieure au poids sans charge (w0).

8. Système de commande (100) selon la revendication 1, dans lequel le processeur est configuré pour générer une commande de couple d'entraînement obtenue en ajoutant une quantité de sortie en fonction du poids de cargaison à une sortie du moteur d'entraînement (121) dans une situation sans charge, et transmettre la commande de couple d'entraînement générée au moteur d'entraînement (121).

9. Système de commande (100) selon la revendication 1, dans lequel le vélo électrique se déplace en actionnant le moteur d'entraînement (121) en fonction d'un signal correspondant à une force exercée sur les pédales par le conducteur sans chaîne.

10. Procédé de commande exécuté dans un système de commande (100) pour un vélo électrique fournissant une sensation de pédale à un conducteur en fournissant une charge de pédale en fonction d'un entraînement d'un moteur de pédale (111) et en fournissant une charge de pédale dans une plage prédéterminée par le moteur de pédale (111) même lorsqu'un changement se produit dans le poids de cargaison obtenu en ajoutant un poids du conducteur et un poids d'un objet chargé, le procédé comprenant :

estimer le poids de cargaison en fonction d'une valeur de sortie d'un moteur d'entraînement (121) qui fournit une force entraîneuse pour entraîner le vélo électrique à se déplacer et des données de déplacement du vélo électrique ; et
générer une commande de couple de pédale correspondant à une valeur estimée de poids de cargaison (w1), et transmettre la commande de couple de pédale au moteur de pédale (111),
dans lequel la transmission comprend calculer une sortie de correction obtenue en soustrayant une quantité de sortie correspondant à la valeur estimée de poids de cargaison (w1) d'une sortie du moteur d'entraînement (121), et générer la commande de couple de pédale reflétant la sortie de correction calculée, et
dans lequel les données de déplacement comprennent une vitesse (v) du vélo électrique en fonction d'une valeur de capteur pour une vitesse de moteur du moteur d'entraînement (121) détectée par un capteur de vitesse (122) et une pente (s) du vélo électrique en fonction d'une valeur de capteur pour une pente (s) du vélo électrique détectée par un capteur de pente (140), respectivement,
**caractérisé en ce que** le poids de cargaison comprend
le poids du conducteur et des objets additionnellement chargés,
dans lequel la valeur de sortie du moteur d'entraînement est une valeur de couple (t) du moteur d'entraînement (121), l'estimation comprend estimer la valeur estimée de poids de cargaison (w1) sur la base d'une relation entre la vitesse (v), la valeur de couple (t), la pente (s) et un poids total (w) du vélo électrique, et le poids total (w) est un poids obtenu en ajoutant un poids sans charge (w0) du vélo électrique et la valeur estimée de poids de cargaison (w1) et
dans lequel l'estimation comprend en outre estimer la valeur estimée de poids de cargaison (w1) sur la base d'une corrélation positive de la valeur estimée de poids de cargaison (w1) par rapport à une valeur de différence (t-dv/dt) entre la valeur de couple (t) et une valeur différentielle (dv/dt) en fonction d'un temps (t) de la vitesse (v), une corrélation négative de la valeur estimée de poids de cargaison (w1) par rapport à chacune de la pente (s) et du poids sans charge (w0), et une relation dans laquelle la valeur estimée de poids de cargaison (w1) présente une variation par rapport à la valeur de différence et à la pente (s) supérieure au poids sans charge (w0).

11. Vélo électrique comprenant le système de commande (100) selon la revendication 1, comprenant : un dispositif de commande de pédale (110) configuré pour fournir une sensation de pédale à un conducteur en actionnant un moteur de pédale (111) en fonction d'une commande de couple de pédale pour fournir une charge de pédale ;

un dispositif de commande d'entraînement (120) configuré pour fournir une force entraîneuse de déplacement en actionnant un moteur d'entraînement (121) en fonction d'une commande de couple d'entraînement ; et
un contrôleur principal (130) configuré pour commander une génération de la commande de couple d'entraînement et commander une génération de la commande de couple de pédale, de sorte qu'une charge de pédale dans une plage prédéterminée soit fournie par le moteur de pédale (111) même lorsqu'un changement se produit dans le poids de cargaison obtenu en ajoutant un poids du conducteur et un poids d'un objet chargé,
dans lequel le contrôleur principal (130) est configuré pour commander pour estimer le poids de cargaison en fonction d'une valeur de sortie du moteur d'entraînement (121) et des données de déplacement, et commander pour générer la commande de couple de pédale correspondant à la valeur estimée de poids de cargaison (w1).

FIG. 1

100

# FIG. 2

MOTOR TORQUE (τ)     SLOPE (s)     <u>130</u>

SPEED (v)

CARGO WEIGHT
ESTIMATION PART — 131

CARGO WEIGHT
ESTIMATION VALUE

TORQUE COMMAND
GENERATION PART — 132

MAIN
CONTROLLER

S1     S2

# FIG. 3

RECEIVE DRIVING MOTOR
OUTPUT AND TRAVELING DATA — S301

ESTIMATE CARGO WEIGHT — S302

GENERATE TORQUE COMMAND
REFLECTING CARGO WEIGHT
ESTIMATION VALUE — S303

# FIG. 4

**EP 4 450 377 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220194520 A1